# EUROPEAN PATENT SPECIFICATION

(11) **EP 0 841 767 B1**
(45) Date of publication and mention of the grant of the patent: **04.07.2001**
(21) Application number: 96402394.9
(22) Date of filing: 08.11.1996
(51) Int. Cl.: H04L 7/00, H04J 3/06

(54) **Method to transparently transport an incoming clock signal over a network segment, and related transmitter and receiver unit**
Verfahren zur transparenten Übertragung eines eingehenden Taktsignals über ein Netzwerk, und verwandte Schaltungen zum Empfangen und Senden
Méthode de transmission transparente d'un signal d'horloge d'entrée par un réseau, et émetteur et récepteur correspondant

(43) Date of publication of application: 13.05.1998
(73) Proprietor: ALCATEL, 75008 Paris (FR)
(72) Inventor: Van Der Putten, Frank Octaaf, 2811 Hombeek (BE); Spruyt, Paul Marie Pierre, 3001 Heverlee (BE)
(74) Representative: Narmon, Gisèle Marie Thérèse

(56) References cited:
- EP-A- 0 705 000
- US-A- 5 260 978
- IEEE TRANSACTIONS ON COMMUNICATIONS, vol. 43, no. 2/04, PART 03, 1 February 1995, pages 1810-1818, XP000505653 LAU R C ET AL: "SYNCHRONOUS TECHNIQUES FOR TIMING RECOVERY IN BISDN"
- BT TECHNOLOGY JOURNAL, vol. 13, no. 3, 1 July 1995, pages 35-45, XP000543496 MULVEY M ET AL: "TIMING ISSUES OF CONSTANT BIT RATE SERVICES OVER ATM"
- INNOVATIONS IN SWITCHING TECHNOLOGY, STOCKHOLM, MAY 28 - JUNE 1, 1990, vol. VOL. 4, no. SYMP. 13, 28 May 1990, INSTITUTE OF ELECTRICAL AND ELECTRONICS ENGINEERS, pages 25-28, XP000130957 VOETEN B ET AL: "INTEGRATING VIDEO CODECS IN ATM NETWORKS"

## Description

The present invention relates to a method to transparently transport an incoming clock signal over a network segment as defined in the preamble of claim 1, a transmitting unit and a receiving unit equipped to perform this method as defined in the preambles of claims 8 and 10 respectively.

As is well known in the art, such a method is to be used for instance in telecommunication networks wherein a network timing reference signal is to be transported over the network but wherein data are transported over a network segment synchronised to a timing reference signal internal for this network segment. The network timing reference signal has to be transmitted over this network segment although it may not be used therein. Within a segment of an ATM (Asynchronous Transfer Mode) network, data may for instance be transmitted over a telephone line in accordance with the ADSL (Asymmetric Digital Subscriber Line) specifications. The transmission of data packed in ADSL frames over the telephone line between a transmitting and a receiving modem is synchronised to the modem clocks. Nevertheless, network layer specifications require that the ATM network timing reference signal is transparently transported over this ADSL network segment. From the point of view of the network segment, the ATM network timing reference signal thus is an incoming clock signal which unaffectedly has to appear at the exit of the ADSL network segment, i.e. at the output of the receiving modem. This could be done by sending the network timing reference signal over a separate transmission means or over the telephone line thereby using part of the transmission capacity of this line. Moreover, this way of transmitting the network timing reference signal implies a considerable complexity increase of the transmitter and receiver.

An object of the present invention is therefore to realise the transmission of the timing reference signal in an efficient way, i.e. without huge complexity increase of the transmitter and receiver in the network segment over which the clock signal is to be transported.

According to the invention, this object is realised by the method defined in claim 1, the transmitting unit and receiving unit defined in claims 8 and 10 respectively.

Indeed, since transmission over the network segment is synchronised to transmit the clock signal, and since both clock signals, the transmit clock signal and receive clock signal, are synchronised, the receiving unit only has to become aware of the phase difference between the incoming clock signal and a reference signal synchronous to the transmit clock signal to be able to generate a copy of the incoming clock signal, provided that it also has a reference signal similarly synchronous to the received clock signal. The reference signal may be obtained by frequency dividing the transmit clock signal. Obviously, a similar reference signal obtained by frequency dividing the receive clock signal then has to be used at the receiver's side in combination with the measured phase difference value to generate the outgoing clock signal there. Determining the phase difference and using it in the receiver and generating a reference signal obviously requires for less additional complexity in the transmitter and receiver than are need in this known methods.

It is noticed that in European Patent Application EP 0 705 000, also the difference is measured between the clock of a lower layer (network reference frequency 28 of the network layer) and the clock of an upper layer (CBR clock of the service layer). The difference measurement as well as the transmission of the difference however occur at the rhythm of the upper layer, as is clear from the paragraph from Col. 1, line. 55 to Col. 2, line. 25 of EP 0 705 000. If the technique of EP 0 705 000 would be applied to transfer the phase difference measured in the above described ATM over ADSL system, the delay between measuring the phase difference (synchronous with the lower ADSL layer because triggered by the local reference signal that is derived from the local sampling clock) and the embedding into data frames (synchronous to the upper ATM layer if the technique of EP 0 705 000 is used) would vary. A lower ADSL layer data frame as a result would sometimes contain a copy of the phase difference information of the previous lower ADSL layer frame (because no new measurement in between) and some measured phase differences would not be transferred at all (because more than one measurement in between). Compared with the present invention, the phase difference information received by the receiver consequently would be less up-to-date and less correct.

Moreover, the present invention differs from the teaching of EP 0 705 000 in that he phase difference is measured, transmitted and used to reconstruct the clock signal, whereas in EP 0 705 000 a Residual Time Stamp is measured, and in that the present invention concerns the transfer of a network timing reference from a transmitter to a receiver, the transmitter and receiver having synchronised sampling clocks, whereas EP 0 705 000 concerns synchronisation of the CBR clocks of a source and destination in a system wherein a network timing reference is available at both the source and destination.

In a particular implementation of the present method wherein the additional required complexity is even more reduced, the reference signal equals the data frame clock signals as defined in claim 2.

In this way, the phase difference value is determined by measuring the time interval between the incoming clock signal and the data frame boundary each time a data frame is transmitted. The phase difference value is measured and transmitted once per data frame. If the data frame is sufficiently large (e.g. an ADSL superframe with a length of 68 x 250 µs), the additional overhead due to transmission of the phase difference value from transmitting to receiving unit is negligible. As will be seen later, the phase difference can easily be measured by means of a counter in this particular implementation.

An advantageous feature of this particular implementation is defined in Claim 3.

Indeed, as will be described in detail later on in the description, the just mentioned implementation with a counter can be realised so that the phase difference value is measured as an integer amount of transmit clock pulses. Since the transmit clock and the receive clock are synchronous, the phase difference to be realised in the receiving unit will also be an integer amount of receive clock pulses.

A further specific feature of the present method is that the phase difference value may be embedded in fields of the date frames, as defined in claim 4.

In this way, no additional overhead is to be added to the data frames to transport the phase difference information. This technique is particularly recommended if, in the network segment, data are transmitted packed in data frames wherein some fields are reserved for special use.

If the data are transmitted in the network segment in accordance with the Asymmetric Digital Subscriber Line (ADSL) specifications, the phase difference values may occupy fields reserved for so called fast bytes, as defined in claim 6.

Indeed, an ADSL superframe contains several fast byte fields only a part of which are used for transporting operation channel related information. Consequently, the remaining fast byte fields may be used to transport the phase difference values.

Another additional feature of the present method is defined by claim 7.

Hence overhead occupancy by phase difference values is further reduced by transmitting phase difference values only if they differ from a previous transmitted value. Since the receiver is aware of this previous transmitted value, he can continue generating the outgoing clock signal without precision decrease when he receives no new phase difference values for a certain time period.

In an alternative embodiment, not the phase difference itself but the deviation from the previous phase difference is transmitted. Again, the overhead occupance can be reduced further by transmitting phase difference deviation values only if they differ from a previous transmitted value. This technique is especially advantageous in case of a fixed clock offset of the incoming clock signal relative to the reference signal synchronous to the transmit clock. In this case the phase difference deviations are (almost) constant and thus need not be transmitted.

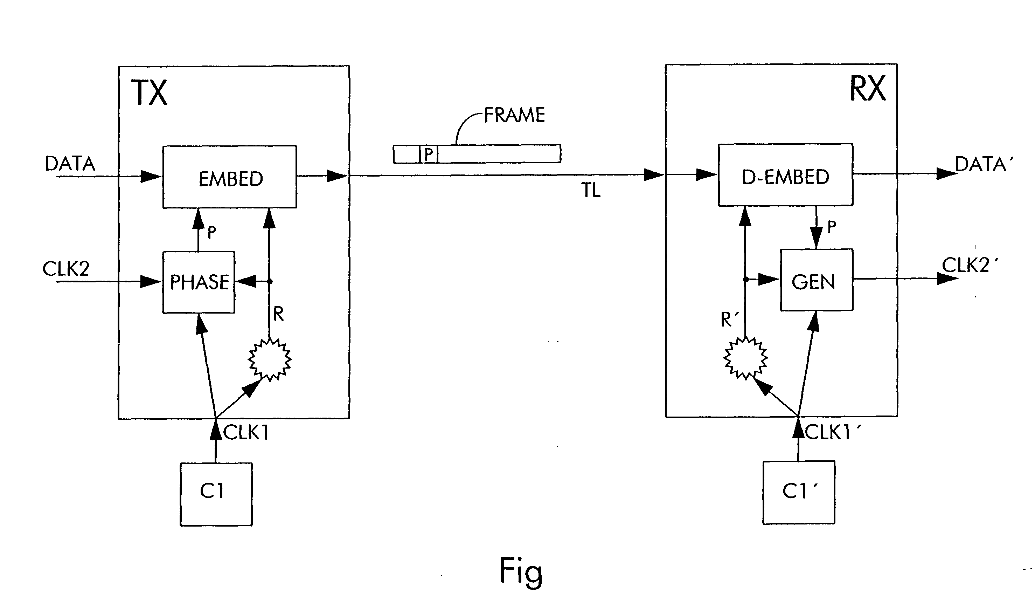

The above mentioned and other objects and features of the invention will become more apparent and the invention itself will be best understood by referring to the following description of an embodiment taken in conjunction with the accompanying drawing which shows a network segment with a transmitting unit TX and receiving unit RX performing an implementation of the method according to the present invention.

The network segment of the figure consists of the cascade connection of a transmitter TX, a telephone line TL, and a receiver RX. The transmitter TX is provided with 3 input terminals; a data input DATA, a network clock input CLK2, and a transmit clock input CLK1. The transmitter TX further has one output terminal and is equipped with a data embedder EMBED and a phase measuring device PHASE. The receiver RX on the other hand has an input coupled to the telephone line TL, a receive clock input CLK1', a data output DATA', and a network clock output CLK2'. The receiver RX moreover includes a data de-embedder D-EMBED and a network clock generator GEN.

In the transmitter TX, the data embedder EMBED is coupled between the data input DATA and output terminal of the transmitter TX. The network clock input CLK2 serves as an input for the phase measuring device PHASE, and also the transmit clock input CLK1 is connected to an input of the phase measuring device PHASE. An output of the phase measuring device PHASE and an input of the data embedder EMBED are interconnected. The transmitter TX in the figure further contains an unlabeled star shaped device which may represent any kind of means which transforms the transmit clock signal CLK1 into a reference signal R. The reference signal R is thus nothing but a transformed clock signal CLK1, is synchronous with this clock signal CLK1 and is applied to inputs of the data embedder EMBED and phase measurement means PHASE respectively.

In the receiver RX, the data de-embedder is coupled between the input coupled to the telephone line TL and the data output DATA'. A phase output P of the de-embedder is connected to a first input of the network clock generator GEN, which has a second input interconnected with the receive clock input CLK1' and an output connected to the network clock output CLK2' of the receiver RX. A similar star shaped, unlabeled device is drawn in the receiver RX to represent any kind of means, e.g. a sequence of frequency dividers, which transforms the receive clock signal CLK1 ' into a reference signal R' similar to the transformation in the transmitter TX. The reference signal R' is applied to inputs of the data de-embedder D-EMBED and network clock generator GEN respectively.

Two clocks, C1 and C1', in the figure represent the transmit clock and receive clock respectively which generate the transmit clock signal and receive clock signal respectively. For evident reasons, their outputs are coupled to the transmit clock input CLK1 of the transmitter TX and receiver clock input CLK1 ' of the receiver RX respectively.

To illustrate the working of the drawn network segment according to the present invention, it will be supposed in the following paragraphs that ATM cells are applied to the data input DATA of the transmitter TX to be transported over the telephone line TL. These ATM cells are accompanied by a network clock signal which is applied to the transmitter TX via the network clock input CLK2. The network clock signal typically is an 8 kHz signal, i.e. a signal with a pulse every 125*µ*s. The transmitter TX and receiver RX can communicate with each other conform the ADSL Specification. In other words, the transmitter is an ADSL modem, which groups incoming data DATA in DMT (Discrete Multi Tone) symbols and embeds these DMT symbols in successive frames to constitute with 68 successive frames a so called ADSL superframe FRAME. The functional blocks of such an ADSL modem, and the structure of DMT symbols, frames and superframes in ADSL are well known by persons skilled in the art. The description thereof is not relevant in view of the present invention. For more details concerning these topics, reference is made to the approved version of the *ANSI (American National Standards Institute, Inc.) Standard on ADSL, referred to as ANSI T1.413 and entitled "Network and Customer Installation Interfaces,* Asymmetric Digital Subscriber Line (ADSL) Metallic Interface". The embedding of incoming data DATA in DMT symbols and ADSL superframes is realised by the embedder EMBED. Each time the reference signal R shows a pulse, the embedder EMBED applies an ADSL superframe via its output to the telephone line TL. The inverse operation is performed by the de-embedder D-EMBED in the receiver RX, triggered by the second reference signal R'which is obtained via similar frequency dividers from the receive clock signal CLK1'. The reference signal R is obtained from the transmit clock signal CLK1 by frequency division. The transmit clock signal CLK1, in this case the ADSL modem clock, has a frequency of 2,208 MHz.

The ATM network layer specifications require that the ATM network clock signal CLK2 of 8 kHz is transported throughout the whole network. The ADSL network segment comprising the transmitter TX, telephone line TL and receiver RX thus has to carry the ATM network clock signal from transmitter TX to receiver RX. For the ATM network, the ADSL network segment is a black box as a result of which it is not important how the network clock signal is transported between TX and RX. The next paragraph describes in a detailed way how the information necessary to enable the receiver RX to reconstitute the ATM network clock signal is determined in the transmitter TX. A subsequent paragraph explains how this information can be embedded in the ADSL superframes to be transferred to the receiver, and a third paragraph is dedicated to the processing in the receiver RX to generate the network clock signal from the receiver information.

Since the frequency of the ATM network clock signal is well-known (8 kHz), no information has to be transmitted between TX and RX with respect thereto. Dividing the modem clock signals (the transmit clock signal CLK1 in TX and receive clock signal CLK1' in RX) of 2,208 MHz through 276 results in a new signal with a frequency of 8 kHz, i.e. the ATM network clock frequency. The receiver RX thus only has to be given phase information of the incoming ATM clock signal CLK2 to be capable to generate a perfect copy thereof at its network clock output CLK2'. The phase measurement device PHASE thereto determines the phase difference between the incoming ATM network clock signal CLK2 and the reference signal R which triggers the transmission of the ADSL superframes. In the phase measurement means PHASE, a counter value is reset to zero when the reference signal R shows a pulse. At that moment, the embedder EMBED transmits an ADSL superframe. The counter value is increased by one each time the transmit clock signal CLK1 shows a pulse, and the counter value P is applied via the output of the phase measurement means PHASE to the embedder EMBED when the ATM network clock CLK2 shows a pulse. Summarising, the phase measurement device PHASE counts the number of transmit clock pulses between the boundary of an ADSL superframe and a network clock pulse. This number is a measure of the phase difference P between CLK2 and R and will be transmitted to the receiver RX.

The embedder EMBED has the task to incorporate the phase difference P in the ADSL superframe. This superframe has a length of 68 DMT symbols, i.e. 68 x 250 *µ*s in time. Each DMT symbol contains a so called fast byte field. This field may be used for special purposes, such as transport of operation channel information, STM synchronisation information, ..... . The already cited ADSL Standard Specification specifies how the fast byte fields of the first two DMT symbols in an ADSL superframe have to be used. The contents of other fast bytes, i.e. those of DMT symbols 3 to 68, is not defined in the Specification. Hence, one of these bytes may be used to transport the phase difference P from transmitter TX to receiver RX. Since one DMT symbol has a length of 250 *µ*s and the phase measurement means PHASE receives a pulse on CLK2 every 125 µs*,* the value P is certainly determined at the end of the first DMT symbol of an ADSL superframe. As a consequence, it is no problem for the embedder EMBED to fill one of the fast bytes in DMT symbols 3 to 68 with the value P.

It is to be remarked that a smart embedder first checks whether the measured phase difference P differs from a previous measured value or not. To minimise use of bandwidth for transmission of phase difference values, the smart embedder writes the value of P in the fast byte field only when there is a difference.

At the receivers side, the de-embedder retrieves the value P from the fast byte field each time an ADSL superframe arrives, i.e. for each pulse of the reference signal R'. The phase difference value P then is applied to the generator GEN which constitutes the outgoing network clock signal CLK2'. From the receive clock signal CLK1' with a frequency of 2,208 MHz, an 8 kHz clock signal is created, again by a frequency division though 276. This 8 kHz clock signal needs to have a phase difference of P receive clock pulses with reference signal R' to be a perfect copy of the incoming ATM network clock signal CLK1. The generator GEN thus manipulates the 8 kHz signal obtained! by frequency division of CLK1', e.g. by delaying the pulses so that the first pulse appears P clock periods of receive clock C1' after reference signal R' has shown a pulse.

It is noticed that the above embodiment is described in terms of functional blocks. The functional blocks, as is clear from the description of their working, contain no unknown components. Consequently, it is apparently obvious to a person skilled in the art of designing electronic circuits how to implement the different blocks EMBED, PHASE, D-EMBED and GEN, given the above description of the functions performed by these blocks.

It should further be remarked that embedding the phase difference value P in fast byte locations is not a necessity when applying the clock transport method according to the present invention. Many alternative solutions, for instance using sync byte fields in ADSL superframes for phase difference value transport, can be thought off without inventive effort.

It should even be noted that the present invention is not limited to systems wherein the phase difference value P is transmitted embedded in frames, since it is obvious to any person skilled in the art, that the measured phase difference value may also be transmitted separated from the frames, e.g. in a time multiplexed or frequency multiplexed way with the frames, to enable the receiver to reconstruct the network clock signal CLK2.

Also a remark is that the phase measurement not necessarily has to be executed each time a frame is transmitted from transmitter to receiver. The frequency of phase measurements is completely free. It is evident that there exists a trade-off between precision of the outgoing network clock and amount of bandwidth resources used on the link. The more frequent phase measurements are done in the transmitter, the more bandwidth is needed on the link between transmitter and receiver to transport the phase information, but the more precise a copy of the incoming network clock CLK2 can be generated in the receiver.

Another parameter which may influence the precision of the generated outgoing network clock is the used phase measurement technique. In view of this, it should be noted that an implementation wherein a counter is used which determines the phase difference P as an amount of transmit clock periods is only one of the many variant techniques to measure the phase difference.

Furthermore, it has to be remarked that although the above described network segment is an ADSL segment receiving ATM cells at its data input and an accompanying ATM clock signal of 8 kHz, the present invention is not restricted thereto. It is clear to a person skilled in the art that minor modifications of the above described method allow it to be implemented in other networks, e.g. SDH (Synchronous Digital Hierarchy) networks, wherein data and network clock have to be transported over non ADSL network segments, e.g. VDSL (Very High Speed Digital Subscriber Line) segments, HFC (Hybrid Fiber Coax) segments, and so on.

A last remark is that, although the data symbols in the above described network segment are transported over a telephone line TL, the applicability of the present invention is not restricted by the transmission medium via which the data are transported. In particular, on any connection between two communicating units, TX and RX, e.g. a cable connection, an optical connection, a satellite connection, a radio link through the air, and so on, the present invention may be realised.

While the principles of the invention have been described above in connection with specific apparatus, it is to be clearly understood that this description is made only by way of example and not as a limitation on the scope of the invention.

## Claims

1. A method to transparently transport a network timing reference (CLK2) having a known constant frequency from an input into a transmitter (TX) to an output of a receiver (RX) wherein a transmitter clock signal (CLK1) is available in said transmitter (TX) and a receiver clock signal (CLK1') is available in said receiver (RX), said transmitter clock signal (CLK1) and said receiver clock signal (CLK1') being synchronised,
characterised in that said method comprises the steps of:
a) measuring a phase difference value (P) between said network timing reference (CLK2) and a first local reference signal (R) obtained from said transmitter clock signal (CLK1) through frequency division;
b) transmitting said phase difference value (P) from said transmitter (TX) to said receiver (RX); and
c) generating in said receiver (RX) an outgoing clock signal (CLK2') with a frequency equal to said known frequency, and with a phase difference from a second local reference signal (R'), obtained from said receiver clock signal (CLK1') through frequency division, equal to said phase difference value (P) number of cycles of said receiver clock signal (CLK1').

2. A method according to claim 1,
characterised in that said transmitter (TX) transmits data frames (FRAME) to said receiver (RX) such that transmission of each data frame (FRAME) is triggered by said first local reference signal (R).

3. A method according to claim 1,
characterised in that said phase difference value (P) is measured in increments of said transmitter clock signal (CLK1) cycles.

4. A method according to claim 1,
characterised in that said measured phase difference value (P) is transmitted embedded within a data frame (FRAME).

5. A method according to claim 1,
characterised in that said phase difference value (P) is not transmitted if it is identical to a previously measured and transmitted first phase difference value.

6. A method according to claim 1,
characterised in that instead of transmitting said phase difference value (P) only a deviation of said phase difference value (P) from a previously measured phase difference value is transferred.

7. A method according to claim 2,
characterised in that said transmitter (TX) and said receiver (RX) comprise an Asymmetric Digital Subscriber Line (ADSL) transmitter and receiver, respectively, and said data frames (FRAME) comprise Asymmetric Digital Subscriber Line superframes.

8. A method according to claim 7,
characterised in that said phase difference value (P) is embedded in fast byte fields of Discrete Multi Tone (DMT) symbols of an Asymmetric Digital Subscriber Line superframe.

9. A Digital Subscriber Line transmitter (TX) having a first input to which data (DATA) is applied, a second input to which a network timing reference (CLK2) is applied, and a third input to which a transmitter clock signal is applied, said Digital Subscriber Line transmitter comprising:
a) embedding means (EMBED) coupled between said first input and an output of said Digital Subscriber Line transmitter (TX), said embedding means being adapted so as to embed said data (DATA) in data frames (FRAME) and to output said data frames (FRAME) to said output of said Digital Subscriber Line transmitter (TX) upon triggering by a local timing reference signal (R), said local timing reference signal (R) being derived from said transmitter clock signal (CLK1) through frequency division,
characterised in that said Digital Subscriber Line transmitter (TX) further comprises:
b) phase measurement means (PHASE) having a first input to which said network timing reference (CLK2) is applied and a second input to which said local timing reference signal (R) is applied, said phase measurement means (PHASE) being adapted so as to measure a phase difference value (P) between said incoming clock signal (CLK2) and said local timing reference signal (R), and to output said phase difference value (P) to said embedding means (EMBED); and further that:
c) said embedding means (EMBED) is adapted so as to embed said phase difference value (P) in a said data frame.

10. A Digital Subscriber Line transmitter (TX) according to claim 9,
characterised in that said phase measurement means (PHASE) comprises:
a counter, to increase its counter value, having a first counter input to which said transmitter clock signal (CLK1) is applied, a second counter input to which said local timing reference signal (R) is applied, and a third counter input to which said incoming clock signal (CLK2) is applied, said counter being adapted so as to increase a counter value upon activation of said first counter input, to reset said counter value upon activation of said second counter input and to output said counter value to said embedding circuitry (EMBED) upon activation of said third counter input.

11. A Digital Subscriber Line receiver (RX) having a receiver input to which data frames (FRAME) are applied, a clock input to which a receiver clock signal is applied, a receiver output and a clock output, said Digital Subscriber Line receiver (RX) comprising:
a) recovery means (D-EMBED), said recovery means (D-EMBED) being adapted so as to retrieve data (DATA') from said data frames and output said data to said receiver output, and so as to recover a phase difference value (P) out of a reserved field within said data frames (FRAME);
b) local timing reference signal means, said local timing reference signal means being adapted so as to generate a local timing reference signal from said receiver clock signal through frequency division;
characterised in that said Digital Subscriber Line receiver (RX) further includes:
c) clock generating means (GEN), having a first input to which said phase difference value (P) is applied, a second input to which said local timing reference signal (R') is applied, and a third input to which said receiver clock signal (C1') is applied, said clock generating means (GEN) being adapted so as to generate a clock signal (CLK2') with a frequency equal to a known frequency of a network timing reference and having a phase difference from said local timing reference signal (R') equal to said phase difference value (P) number of clock cycles of said receiver clock signal.

## Patentansprüche

1. Verfahren zum transparenten Transportieren eines Netztaktbezugs (CLK2) mit einer bekannten konstanten Frequenz von einem Eingang in einen Sender (TX) zu einem Ausgang eines Empfängers (RX), bei dem ein Sendertaktsignal (CLK1) im Sender (TX) verfügbar ist und ein Empfängertaktsignal (CLK1') im Empfänger (RX) verfügbar ist, wobei das Sendertaktsignal (CLK1) und das Empfängertaktsignal (CLK1') synchronisiert sind,
dadurch gekennzeichnet, daß das Verfahren die Schritte umfaßt:
a) Messen eines Phasendifferenzwertes (P) zwischen dem Netztaktbezug (CLK2) und einem ersten lokalen Bezugssignal (R), das durch Frequenzteilung aus dem Sendertaktsignal (CLK1) erhalten wird,
b) Übertragen des Phasendifferenzwertes (P) vom Sender (TX) zum Empfänger (RX); und
c) Erzeugen eines abgehenden Taktsignals (CLK2') im Empfänger (RX) mit einer Frequenz gleich der bekannten Frequenz und einer Phasendifferenz zu einem zweiten lokalen Bezugssignal (R'), das durch Frequenzteilung aus dem Empfängertaktsignal (CLK1') erhalten wird, gleich dem Phasendifferenzwert (P) Anzahl von Zyklen des Empfängertaktsignals (CLK1').

2. Verfahren nach Anspruch 1,
dadurch gekennzeichnet, daß der Sender (TX) Datenblöcke (FRAME) zum Empfänger (RX) so überträgt, daß die Übertragung jedes Datenblocks (FRAME) durch das erste lokale Bezugssignal (R) getriggert wird.

3. Verfahren nach Anspruch 1,
dadurch gekennzeichnet, daß der Phasendifferenzwert (P) in Inkrementen der Zyklen des Sendertaktsignals (CLK1) gemessen wird.

4. Verfahren nach Anspruch 1,
dadurch gekennzeichnet, daß der gemessene Phasendifferenzwert (P) in einem Datenblock (FRAME) eingebettet übertragen wird.

5. Verfahren nach Anspruch 1,
dadurch gekennzeichnet, daß der Phasendifferenzwert (P) nicht übertragen wird, wenn er mit einem vorher gemessenen und übertragenen ersten Phasendifferenzwert identisch ist.

6. Verfahren nach Anspruch 1,
dadurch gekennzeichnet, daß anstatt einer Übertragung des Phasendifferenzwertes (P) nur eine Abweichung des Phasendifferenzwertes (P) von einem vorher gemessenen Phasendifferenzwert übertragen wird.

7. Verfahren nach Anspruch 2,
dadurch gekennzeichnet, daß der Sender (TX) und der Empfänger (RX) einen Sender bzw. Empfänger für asymmetrische digitale Teilnehmerleitungen (ADSL-Sender bzw. - Empfänger) umfaßt und die Datenblöcke (FRAME) Superblöcke für asymmetrische digitale Teilnehmerleitungen umfassen.

8. Verfahren nach Anspruch 7,
dadurch gekennzeichnet, daß der Phasendifferenzwert (P) in Felder für schnelle Bytes von diskreten Mehrton(DMT)-Symbolen eines Superblocks für asymmetrische digitale Teilnehmerleitungen eingebettet ist.

9. Sender (TX) für digitale Teilnehmerleitungen mit einem ersten Eingang, auf den Daten (DATA) gegeben werden, einem zweiten Eingang, auf den ein Netztaktbezug (CLK2) gegeben wird, und einem dritten Eingang, auf den ein Sendertaktsignal gegeben wird, wobei der Sender für digitale Teilnehmerleitungen umfaßt:
a) eine Einbettungseinrichtung (EMBED), die zwischen dem ersten Eingang und einem Ausgang des Senders (TX) für digitale Teilnehmerleitungen angeschlossen ist, wobei die Einbettungseinrichtung dafür ausgelegt ist, die Daten (DATA) in Datenblöcke (FRAME) einzubetten und die Datenblöcke (FRAME) bei Triggerung durch ein lokales Taktbezugssignal (R) an den Ausgang des Senders (TX) für digitale Teilnehmerleitungen auszugeben, wobei das lokale Taktbezugssignal (R) durch Frequenzteilung vom Sendertaktsignal (CLK1) abgeleitet ist,
dadurch gekennzeichnet, daß der Sender (TX) für digitale Teilnehmerleitungen ferner umfaßt:
b) eine Phasenmeßeinrichtung (PHASE) mit einem ersten Eingang, auf den der Netztaktbezug (CLK2) gegeben wird, und einem zweiten Eingang, auf den das lokale Taktbezugssignal (R) gegeben wird, wobei die Phasenmeßeinrichtung (PHASE) dafür ausgelegt ist, einen Phasendifferenzwert (P) zwischen dem eingehenden Taktsignal (CLK2) und dem lokalen Taktbezugssignal (R) zu messen und den Phasendifferenzwert (P) an die Einbettungseinrichtung (EMBED) auszugeben, und ferner, daß:
c) die Einbettungseinrichtung (EMBED) dafür ausgelegt ist, den Phasendifferenzwert (P) in den Datenblock einzubetten.

10. Sender (TX) für digitale Teilnehmerleitungen nach Anspruch 9,
dadurch gekennzeichnet, daß die Phasenmeßeinrichtung (PHASE) umfaßt: einen Zähler zur Erhöhung seines Zählerwertes mit einem ersten Zählereingang, auf den das Sendertaktsignal (CLK1) gegeben wird, einem zweiten Zählereingang, auf den das lokale Taktbezugssignal (R) gegeben wird, und einem dritten Zählereingang, auf den das eingehende Taktsignal (CLK2) gegeben wird, wobei der Zähler dafür ausgelegt ist, bei Aktivierung des ersten Zählereingangs einen Zählerwert zu erhöhen, bei Aktivierung des zweiten Zählereingangs den Zählerwert zurückzusetzen und bei Aktivierung des dritten Zählereingangs den Zählerwert an die Einbettungsschaltung (EMBED) auszugeben.

11. Empfänger (RX) für digitale Teilnehmerleitungen mit einem Empfängereingang, auf den Datenblöcke (FRAME) gegeben werden, einem Takteingang, auf den ein Empfängertaktsignal gegeben wird, einem Empfängerausgang und einem Taktausgang, wobei der Empfänger (RX) für digitale Teilnehmerleitungen umfaßt:
a) eine Wiedergewinnungseinrichtung (D-EMBED), wobei die Wiedergewinnungseinrichtung (D-EMBED) dafür ausgelegt ist, Daten (DATA') aus den Datenblöcken wiederzugewinnen und die Daten an den Empfängerausgang auszugeben und den Phasendifferenzwert (P) aus einem reservierten Feld in den Datenblöcken (FRAME) wiederzugewinnen;
b) eine Einrichtung für ein lokales Taktbezugssignal, wobei die Einrichtung für ein lokales Taktbezugssignal dafür ausgelegt ist, ein lokales Taktbezugssignal durch Frequenzteilung aus dem Empfängertaktsignal zu erzeugen;
dadurch gekennzeichnet, daß der Empfänger (TX) für digitale Teilnehmerleitungen ferner umfaßt:
c) eine Takterzeugungseinrichtung (GEN) mit einem ersten Eingang, auf den der Phasendifferenzwert (P) gegeben wird, einem zweiten Eingang, auf den das lokale Taktbezugssignal (R') gegeben wird, und einem dritten Eingang, auf den das Empfängertaktsignal (C1') gegeben wird, wobei die Takterzeugungseinrichtung (GEN) dafür ausgelegt ist, ein Taktsignal (CLK2') mit einer Frequenz gleich einer bekannten Frequenz eines Netztaktbezugs und mit einer Phasendifferenz zum lokalen Taktbezugssignal (R') gleich dem Phasendifferenzwert (P) Anzahl von Taktzyklen des Empfängertaktsignals zu erzeugen.

## Revendications

1. Procédé pour transporter de manière transparente une référence de synchronisation de réseau (CLK2) ayant une fréquence constante connue depuis une entrée dans un émetteur (TX) jusqu'à une sortie d'un récepteur (RX), dans lequel un signal d'horloge d'émetteur (CLK1) est disponible dans ledit émetteur (TX) et un signal d'horloge de récepteur (CLK1') est disponible dans ledit récepteur (RX), ledit signal d'horloge d'émetteur (CLK1) et ledit signal d'horloge de récepteur (CLK1') étant synchronisés,
caractérisé en ce que ledit procédé comprend les étapes consistant à :
a) mesurer une valeur de différence de phase (P) entre ladite référence de synchronisation de réseau (CLK2) et un premier signal de référence local (R) obtenu à partir dudit signal d'horloge d'émetteur (CLK1) par une division de fréquence ;
b) transmettre ladite valeur de différence de phase (P) dudit émetteur (TX) audit récepteur (RX); et
c) générer dans ledit récepteur (RX) un signal d'horloge sortant (CLK2') avec une fréquence égale à ladite fréquence connue et avec une différence de phase par rapport à un second signal de référence local (R'), obtenu à partir dudit signal d'horloge de récepteur (CLK1') par division de fréquence, égale audit nombre de cycles de valeur de différence de phase (P) dudit signal d'horloge de récepteur (CLK1').

2. Procédé selon la revendication 1, caractérisé en ce que ledit émetteur (TX) émet des trames de données (FRAME) vers ledit récepteur (RX) de sorte que la transmission de chaque trame de données (FRAME) soit déclenchée par ledit premier signal de référence local (R).

3. Procédé selon la revendication 1, caractérisé en ce que ladite valeur de différence de phase (P) est mesurée en incréments desdits cycles de signal d'horloge d'émetteur (CLK1).

4. Procédé selon la revendication 1, caractérisé en ce que ladite valeur de différence de phase (P) mesurée est transmise incrustée dans une trame de données (FRAME).

5. Procédé selon la revendication 1, caractérisé en ce que ladite valeur de différence de phase (P) n'est pas transmise si elle est identique à une première valeur de différence de phase mesurée et transmise précédemment.

6. Procédé selon la revendication 1, caractérisé en ce que, au lieu de transmettre ladite valeur de différence de phase (P), un écart seulement de ladite valeur de différence de phase (P) par rapport à une valeur de différence de phase mesurée précédemment est transféré.

7. Procédé selon la revendication 2, caractérisé en ce que ledit émetteur (TX) et ledit récepteur (RX) comprennent, respectivement, un émetteur et un récepteur ADSL (ligne d'abonné numérique à débit asymétrique) et lesdites trames de données (FRAME) comprennent des supertrames ADSL.

8. Procédé selon la revendication 7, caractérisé en ce que ladite valeur de différence de phase (P) est incrustée dans des champs d'octets rapides de symboles DMT (multitonalité discrète) d'une supertrame ADSL.

9. Emetteur de ligne d'abonné numérique (TX) ayant une première entrée à laquelle des données (DATA) sont appliquées, une seconde entrée à laquelle une référence de synchronisation de réseau (CLK2) est appliquée et une troisième entrée à laquelle un signal d'horloge d'émetteur est appliqué, ledit émetteur de ligne d'abonné numérique comprenant :
a) des moyens d'incrustation (EMBED) couplés entre ladite première entrée et une sortie dudit émetteur de ligne d'abonné numérique (TX), lesdits moyens d'incrustation étant adaptés pour incruster lesdites données (DATA) dans des trames de données (FRAME) et pour sortir lesdites trames de données (FRAME) vers ladite sortie dudit émetteur de ligne d'abonné numérique (TX) lors du déclenchement par un signal de référence de synchronisation local (R), ledit signal de référence de synchronisation local (R) étant déduit dudit signal d'horloge d'émetteur (CLK1) par une division de fréquence,
caractérisé en ce que ledit émetteur de ligne d'abonné numérique (TX) comprend, de plus :
b) des moyens de mesure de phase (PHASE) ayant une première entrée à laquelle ladite référence de synchronisation de réseau (CLK2) est appliquée et une seconde entrée à laquelle ledit signal de référence de synchronisation local (R) est appliqué, lesdits moyens de mesure de phase (PHASE) étant adaptés pour mesurer une valeur de différence de phase (P) entre ledit signal d'horloge entrant (CLK2) et ledit signal de référence de synchronisation local (R) et pour sortir ladite valeur de différence de phase (P) vers lesdits moyens d'incrustation (EMBED) ; et, de plus, en ce que :
c) lesdits moyens d'incrustation (EMBED) sont adaptés pour incruster ladite valeur de différence de phase (P) dans ladite trame de données.

10. Emetteur de ligne d'abonné numérique (TX) selon la revendication 9, caractérisé en ce que lesdits moyens de mesure de phase (PHASE) comprennent : un compteur, afin d'incrémenter sa valeur de compteur, ayant une première entrée de compteur à laquelle ledit signal d'horloge d'émetteur (CLK1) est appliqué, une seconde entrée de compteur à laquelle ledit signal de référence de synchronisation local (R) est appliqué et une troisième entrée de compteur à laquelle ledit signal d'horloge entrant (CLK2) est appliqué, ledit compteur étant adapté pour augmenter une valeur de compteur lors de l'activation de ladite première entrée de compteur, pour réinitialiser ladite valeur de compteur lors de l'activation de ladite seconde entrée de compteur et pour sortir ladite valeur de compteur vers lesdits éléments de circuit d'incrustation (EMBED) lors de l'activation de ladite troisième entrée de compteur.

11. Récepteur de ligne d'abonné numérique (RX) ayant une entrée de récepteur à laquelle des trames de données (FRAME) sont appliquées, une entrée d'horloge à laquelle un signal d'horloge de récepteur est appliqué, une sortie de récepteur et une sortie d'horloge, ledit récepteur de ligne d'abonné numérique (RX) comprenant :
a) des moyens de récupération (D-EMBED), lesdits moyens de récupération (D-EMBED) étant adaptés pour récupérer les données (DATA') à partir desdites trames de données et pour sortir lesdites données vers ladite sortie de récepteur, et pour récupérer une valeur de différence de phase (P) dans un champ réservé dans lesdites trames de données (FRAME) ;
b) des moyens formant signal de référence de synchronisation local, lesdits moyens formant signal de référence de synchronisation local étant adaptés pour générer un signal de référence de synchronisation local à partir dudit signal d'horloge de récepteur par une division de fréquence ;
caractérisé en ce que le récepteur de ligne d'abonné numérique (RX) comprend, de plus :
c) des moyens de génération d'horloge (GEN) ayant une première entrée à laquelle ladite valeur de différence de phase (P) est appliquée, une seconde entrée à laquelle ledit signal de référence de synchronisation local (R') est appliqué et une troisième entrée à laquelle ledit signal d'horloge de récepteur (C1') est appliqué, lesdits moyens de génération d'horloge (GEN) étant adaptés pour générer un signal d'horloge (CLK2') ayant une fréquence égale à une fréquence connue d'une référence de synchronisation de réseau et ayant une différence de phase par rapport audit signal de référence de synchronisation local (R') égale audit nombre de cycles d'horloge de valeur de différence de phase (P) dudit signal d'horloge de récepteur.
